# EUROPEAN PATENT SPECIFICATION

(11) **EP 4 135 264 B1**
(45) Date of publication and mention of the grant of the patent: **28.10.2026**
(21) Application number: 20935951.2
(22) Date of filing: 30.12.2020
(51) Int. Cl.: H04L 41/147, H04L 41/12

(54) **METHOD AND APPARATUS FOR PREDICTING NODE STATE**
VERFAHREN UND VORRICHTUNG ZUR VORHERSAGE EINES KNOTENSTATUS
PROCÉDÉ ET APPAREIL DE PRÉDICTION D'ÉTAT DE NOEUD

(30) Priority: 14.05.2020 CN 202010409392
(43) Date of publication of application: 15.02.2023
(73) Proprietor: Huawei Technologies Co., Ltd., Longgang Shenzhen, Guangdong 518129 (CN)
(72) Inventor: ZHANG, Chengzhi, Shenzhen, Guangdong 518129 (CN); ZHOU, Min, Shenzhen, Guangdong 518129 (CN); YI, Hanling, Shenzhen, Guangdong 518129 (CN); MARCUS, Kalander, Shenzhen, Guangdong 518129 (CN); ZHUANG, Kechen, Shenzhen, Guangdong 518129 (CN)
(74) Representative: Körber, Martin Hans
(86) International application number: PCT/CN2020/141253
(87) International publication number: WO 2021/227535

(56) References cited:
- CN-A- 108 234 198
- CN-A- 109 862 585
- CN-A- 110 995 520
- CN-A- 111 726 243
- US-A1- 2014 133 453
- US-A1- 2020 125 083
- KHOSHRAFTAR SHIMA ET AL: "Dynamic Graph Embedding via LSTM History Tracking", 2019 IEEE INTERNATIONAL CONFERENCE ON DATA SCIENCE AND ADVANCED ANALYTICS (DSAA), IEEE, 5 October 2019 (2019-10-05), pages 119 - 127, XP033694392, DOI: 10.1109/DSAA.2019.00026
- SANKALP GARG ET AL: "Temporal Attribute Prediction via Joint Modeling of Multi-Relational Structure Evolution", ARXIV.ORG, CORNELL UNIVERSITY LIBRARY, 201 OLIN LIBRARY CORNELL UNIVERSITY ITHACA, NY 14853, 9 March 2020 (2020-03-09), XP081617423

## Description

### TECHNICAL FIELD

This application relates to the field of artificial intelligence technologies, and specifically, to a method and an apparatus for predicting a node state.

### BACKGROUND

In some networks, a current state of a node is related not only to time, but also to space in which the node is located. For example, in a cellular network, traffic carried by a base station in daytime is different from traffic carried by the base station at night, that is, traffic carried by a base station is correlated with time; and in addition, traffic carried by a base station located at a center of the network is different from traffic carried by a base station located at an edge of the network, that is, traffic carried by a base station is correlated with space. To facilitate network management and maintenance, a state in a future period of time needs to be predicted for a node in a network.

A method for predicting a node state is to obtain a preset network topology view and predict a state of a node in a network based on the preset network topology view and some network-related time information. This method is applicable to a network whose topology structure stays in a fixed state for a long time. For a network whose topology structure changes rapidly with time, such as a cellular network, an effect achieved by applying the above method is less satisfactory. US 2020/0125083 A relates to graph-based predictive maintenance for complex systems, for detecting failure compoments in the complex system. KHOSHRAFTAR SHIMA ET AL, "Dynamic Graph Embedding via LSTM History Tracking", 2019 IEEE INTERNATIONAL CONFERENCE ON DATA SCIENCE AND ADVANCED ANALYTICS (DSAA), IEEE, (20191005), pages 119 - 127, discloses a dynamic network embedding method that integrates the history of nodes over time into the current state of nodes. SANKALP GARG ET AL, "Temporal Attribute Prediction via Joint Modeling of Multi-Relational Structure Evolution", ARXIV.ORG, CORNELL UNIVERSITY LIBRARY, (20200309), discloses a framework for learning the set of functions for predicting the events for the next timestamp, given the history.

### SUMMARY

This application provides a method and an apparatus for predicting a node state, so as to increase accuracy of node state prediction in a network with a dynamic topological relationship.

According to a first aspect, a method for predicting a node state is provided, including: obtaining static graphs and dynamic graphs of a plurality of nodes in a target network, where the static graphs and the dynamic graphs are all topology views; generating spatial feature data of the plurality of nodes based on the static graphs and the dynamic graphs using a spatial model; obtaining time feature data of the plurality of nodes using a temporal model; and obtaining a predicted state of a target node in a target time range based on the spatial feature data and the time feature data, where the target node is any node in the plurality of nodes. The method further includes: obtaining a true state of the target node in the target time range; and training the temporal model and the spatial model based on the true state and the predicted state, where the temporal model is used to output the time feature data based on the observation data, and the spatial model is used to output the spatial feature data based on the static graphs and the dynamic graphs that are input.

In a process of node state prediction, a dynamic spatial feature is used in addition to a time feature and a static spatial feature. This increases accuracy of node state prediction in a network with a dynamic topological relationship, so that the network is more intelligent in node state prediction. Through training, prediction accuracy of the spatial model and the temporal model can be increased.

The obtaining time feature data of the plurality of nodes includes: obtaining observation data of the plurality of nodes in a first historical time range, where the first historical time range is a time range before the target time range; slicing the observation data in a time dimension to obtain time slice data, where a data amount of the time slice data is less than a data amount of the observation data; and obtaining the time feature data based on the time slice data.

The time slice data is partial data selected from a complete observation data set. Compared with the complete observation data set, the time slice data has a smaller data amount, and performing prediction by using the time slice data can reduce a time required for prediction.

Optionally, the time slice data includes: observation data in a time range that is in the first historical time range and that is adjacent to the target time range.

Optionally, the time slice data includes: observation data in a specific time range in the first historical time range, where the specific time range is located in a first period, the target time range is located in a second period, and the specific time range includes a time range that corresponds to the target time range and that is in the first period.

The adjacent time range is close to the target time range, and the specific time range and the target time range are located at corresponding time-domain locations in different periods. Therefore, the observation data in the adjacent time range and that in the specific time range have a relatively strong correlation with a node state in the target time range. Performing prediction by using the observation data in the adjacent time range and/or that in the specific time range is beneficial to improving prediction accuracy.

Optionally, the obtaining static graphs and dynamic graphs of a plurality of nodes includes: obtaining observation data of the plurality of nodes in a second historical time range, where the second historical time range is a time range before the target time range; and constructing the static graphs and the dynamic graphs based on the observation data.

The second historical time range may be the same as or different from the first historical time range. A latest spatial feature can be obtained in time by constructing the static graphs and the dynamic graphs by using the observation data.

Optionally, the observation data includes at least one of the following data: meteorological data, network topology data, traffic data, voice data, signaling data, point of interest POI data, major-event data, and holiday data.

The network topology data, the traffic data, the voice data, the signaling data, and the POI data may be used to construct the static graphs and the dynamic graphs, to help obtain the spatial feature data. The meteorological data, the major-event data, and the holiday data may be used to obtain the time feature data. The foregoing observation data used to obtain the spatial feature data may also be used to obtain the time feature data. The foregoing data has different sources and different data structures, and may be referred to as multi-source heterogeneous data. The time feature data and the spatial feature data are obtained from the multi-source heterogeneous data, and this enables a temporal model and a spatial model to learn richer knowledge, thereby increasing prediction accuracy.

Optionally, the static graphs belong to first-type topology views, the dynamic graphs belong to

second-type topology views, and a topological relationship change rate of the first-type topology views is less than a topological relationship change rate of the second-type topology views.

Optionally, the target network is a communications network, the static graphs are topology views representing a traffic-based topological relationship of the plurality of nodes, and the dynamic graphs are topology views representing a physical-line-based topological relationship of the plurality of nodes.

According to a second aspect, this application provides an apparatus for predicting a node state, including units configured to perform the method according to the first aspect. The apparatus may be a terminal device or a server, or may be a chip in a terminal device or a server. The apparatus may include an input unit and a processing unit.

When the apparatus is a terminal device or a server, the processing unit may be a processor, and the input unit may be a transceiver. The terminal device may further include a storage unit, and the storage unit may be a memory. The storage unit is configured to store an instruction, and the processing unit executes the instruction stored in the storage unit, so that the terminal device performs the method according to the first aspect.

When the apparatus is a chip in a terminal device or a server, the processing unit may be a processing unit inside the chip, and the input unit may be an input/output interface, a pin, a circuit, or the like. The processing unit executes an instruction stored in a storage unit, so that the chip performs the method according to the first aspect. The storage unit may be a storage unit (for example, a register or a buffer) in the chip, or may be a storage unit (for example, a read-only memory or a random access memory) located outside the chip.

According to a third aspect, this application provides a computer readable storage medium. The computer readable storage medium stores a computer program. When the computer program is executed by a processor, the processor is enabled to perform the method according to the first aspect.

According to a fourth aspect, this application provides a computer program product. The computer program product includes computer program code. When the computer program code is run by a processor, the processor is enabled to perform the method according to the first aspect.

### BRIEF DESCRIPTION OF DRAWINGS

FIG. 1 shows a network applicable to this application;
FIG. 2 is a schematic diagram of dynamic graphs and static graphs according to this application;
FIG. 3 is a schematic diagram of a method for predicting a node state according to this application;
FIG. 4 is a schematic diagram of historical traffic according to this application;
FIG. 5 is a schematic diagram of a method for obtaining time slice data according to this application;
FIG. 6 is a schematic diagram of a method for predicting a base station state according to this application;
FIG. 7 is a schematic diagram of an apparatus for predicting a node state according to this application; and
FIG. 8 is a schematic diagram of a device for predicting a node state according to this application.

### DESCRIPTION OF EMBODIMENTS

The following describes technical solutions of this application with reference to accompanying drawings.

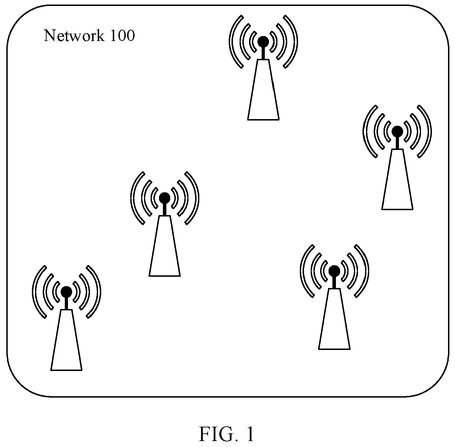

FIG. 1 shows a network applicable to this application. A network 100 includes a plurality of base stations. A base station may be referred to as a node. There are two types of connection relationships between the base stations: one is a physical line and the other is traffic. The traffic between the base stations and the base stations jointly form one type of topology view of the network 100, and the physical line between the base stations and the base stations jointly form the other type of topology view of the network 100. Affected by a use behavior and a movement behavior of a user, traffic carried by each base station has a relatively strong correlation with a time dimension and a space dimension. Therefore, a traffic-based topology view continuously changes with time. Such a topology view with a topological relationship changing quickly with time may be referred to as a dynamic graph. The physical line is not affected by the use behavior and the movement behavior of the user. A topological relationship of such a topology view changes slowly with time, and therefore, the topology view may be referred to as a static graph.

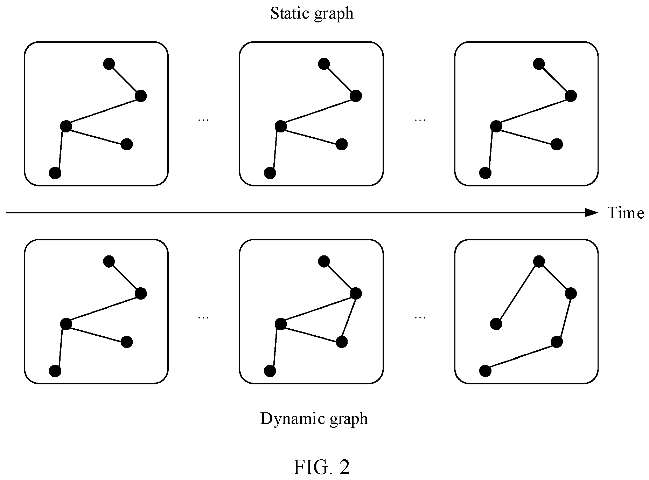

FIG. 2 shows dynamic graphs and static graphs of the network 100. Black dots denote base stations. In the dynamic graphs, lines between the black dots denote traffic. In the static graphs, lines between the black dots denote physical lines.

In addition to the network 100, other networks that have dynamic graphs and static graphs are all applicable to this application.

For example, in a power grid, substations may be considered as nodes. An electricity transmission line between the substations and the substations jointly form a static graph of the power grid, and a current between the substations and the substations jointly form a dynamic graph of the power grid.

For another example, in a social network, users may be considered as nodes. A relationship between friendly users and these users jointly form a static graph of the social network, and a relationship between stranger users and these users jointly form a dynamic graph of the social network.

The following describes the technical solutions of this application in detail by using the network 100 as an example.

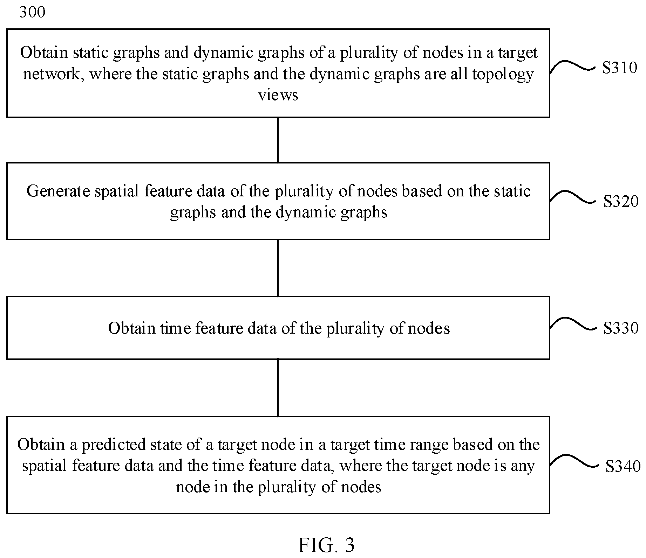

As shown in FIG. 3, a method 300 includes the following steps.

S310: Obtain static graphs and dynamic graphs of a plurality of nodes in a target network, where the static graphs and the dynamic graphs are all topology views.

The static graphs and the dynamic graphs are undirected unweighted graphs. G=(V,E) may be used to denote an undirected unweighted graph, where V denotes a collection of nodes, and E denotes a collection of connection lines between the nodes. A connection matrix *A*(*i*, *j*) may be used to denote a connection relationship between a node i and a node *j*. When *A*(*i*, *j*) = 1, it indicates that a connection relationship exists between the node i and the node *j;* or when *A*(*i, j*) = 0, it indicates that no connection relationship exists between the node i and the node*j.*

An apparatus for performing the method 300 may construct connection matrices corresponding to different graphs by using a plurality of methods.

For example, when longitudes and latitudes of the base stations are known, distances between the base stations may be determined, and then connection matrices between the base stations may be determined based on formula (1), so as to further determine the static graphs. ${A}_{SD} \left(i, j\right) = F \left({e}^{\left(-\frac{{d}_{ij}^{2}}{{σ}^{2}}\right)}\right)$ (1)

*A_{SD}*(*i, j*) denotes a connection relationship between a base station i and a base station *j* that is determined based on a distance. When *A_{SD}*(*i, j*), it indicates that a connection relationship exists the base station i and the base station *j*, or when *A_{SD}*(*i*, *j*) = 0, it indicates that no connection relationship exists between the base station i and the base station *j*. *dᵢⱼ* denotes a distance between the base station i and the base station *j*. *e* denotes a natural constant. *σ* is a hyperparameter, which is used to control a value of a distance between base stations. F is a mapping function, which is used to map ${e}^{\left(\frac{{d}_{ij}^{2}}{{σ}^{2}}\right)}$ to 1 or 0.

For another example, when historical traffic of the base stations is known, a similarity may be calculated by using the historical traffic, and then the connection matrices between the base stations may be determined based on formula (2), so as to further determine the static graphs. ${A}_{FS} \left(i, j\right) = F \left({ρ}_{{x}_{w} \left(i\right) , {x}_{w} \left(j\right)}\right)$ (2)

*A_{FS}*(*i*, *j*) denotes a connection relationship between a base station i and a base station j that is determined based on the historical traffic. When *A_{FS}*(*i, j*) = 1, it indicates that a connection relationship exists the base station i and the base station j, or when *A_{FS}*(*i, j*) = 0, it indicates that no connection relationship exists between the base station i and the base station *j*. *x_{w}*(*i*) denotes weekly average traffic data of the base station i. *x_{w}*(*j*) denotes weekly average traffic data of the base station *j. ρ*_{*x*_{w}(*i*)*,x*_{w}}(*j*) denotes a Pearson (Pearson) correlation coefficient between *x_{w}*(*i*) and *x_{w}*(*j*). F is a mapping function, which is used to map *ρ*_{*x*_{w}(*i*),*x*_{w}(*j*)} to 1 or 0.

The method for determining a static graph is described above, and a method for determining a dynamic graph is described below.

For example, a static graph may be used as an initial graph and then may be updated by using real-time data to obtain a dynamic graph.

For another example, a dynamic graph may be directly constructed by using real-time data, as shown in formula (3). ${A}_{TC}^{t} \left(i, j\right) = F \left({ρ}_{{x}_{t} \left(i\right) , {x}_{t} \left(j\right)}\right)$ (3) ${A}_{TC}^{t} \left(i, j\right)$ denotes a connection relationship at moment *t* between a base station i and a base station j that is determined based on traffic. *xₜ*(*i*)=(*x*_{*t-H*+1}(*i*),...,*x*_{*t*-1}(*i*)) denotes a collection of traffic of the base station i at H moments closest to the moment *t. xₜ*(*j*)=(*x*_{*t-H*+1}(*j*),...,*x*_{*t*-1}(*j*)) denotes a collection of traffic of the base station j at the H moments closest to the moment *t. ρ*_{*x*ₜ(*i*)*,x*ₜ(*j*)} denotes a Pearson correlation coefficient between *xₜ*(*i*) and *xₜ*(*j*). F is a mapping function, which is used to map *ρ*_{*x*_{w}(*i*),*x*_{w}(*j*)} to 1 or 0.

Optionally, in the foregoing several examples, a method for mapping F to a variable is shown in formula (4). $F \left(z\right) = \left\{\begin{matrix}1 , \left|z\right| \geq ò \\ 0 , \left|z\right| < ò\end{matrix}\right.$ (4)

*z* denotes ${e}^{\left(\frac{{d}_{ij}^{2}}{{σ}^{2}}\right)}$, *ρ_{x_{w}}*(*i*),*x_{w}*(*j*)*,* or *ρ*_{*x*ₜ*(i),x*ₜ(*j*)*.*} ò is a hyperparameter, which is used to control a density of a topology view.

The method for determining a static graph and that for determining a dynamic graph that are applicable to this application are not limited to the examples described above.

After obtaining the static graphs and the dynamic graphs, the apparatus for performing the method 300 performs the following steps.

S320: Generate spatial feature data of the plurality of nodes based on the static graphs and the dynamic graphs.

For example, the static graphs and the dynamic graphs may be processed by using a graph neural network (graph neural network, GCN), and a convolution operation may be performed on the static graphs and the dynamic graphs separately by using a convolution kernel of the GCN to obtain the spatial feature data.

S330: Obtain time feature data of the plurality of nodes.

An execution sequence of S320 and S330 is not limited. Observation data of the plurality of nodes in a historical time range may be processed by using a gated recurrent unit (gate recurrent unit, GRU) in a recursive neural network (recursive neural network, RNN) to obtain the time feature data.

The foregoing observation data includes at least one of the following data: meteorological data, network topology data, traffic data, voice data, signaling data, point of interest (point of interest, POI) data, major-event data, and holiday data.

Generally, a data amount of the observation data is relatively large, and a time required for performing prediction by directly using the observation data is relatively long. Therefore, before processing the observation data, the observation data may be preprocessed to reduce the time required for prediction.

For example, the observation data is sliced (that is, sampled) by using, for example, characteristics of the observation data such as temporal proximity and periodicity to determine time slice data from the observation data. A data amount of the time slice data is less than the data amount of the observation data. Then, the time slice data is processed by using the GRU to obtain the time feature data.

The following describes a method for performing time slicing on traffic data according to this application.

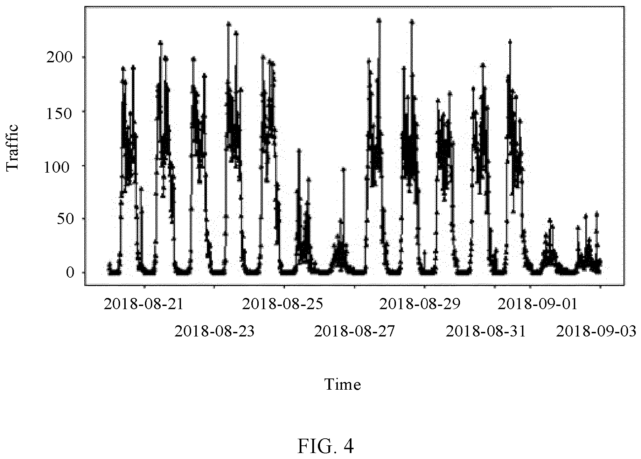

FIG. 4 shows traffic data within a historical time range (20 days) of a target base station. It can be learned that, the traffic data is apparently periodic. The traffic data may be sliced based on a location of the target time range (that is, a time range in which prediction is to be performed) in one period, and traffic data in a time range that corresponds to the target time range and that is in another period is determined as the time slice data. Because data in corresponding time ranges in different periods is similar, performing prediction based on time slice data obtained based on this feature can reduce the time required for prediction without affecting a prediction effect.

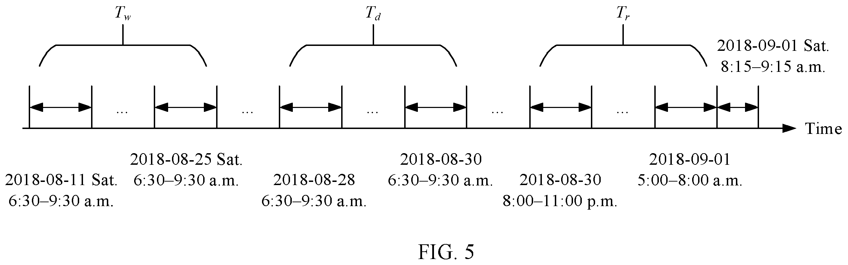

FIG. 5 shows a method for obtaining time slice data.

If the target time range is 8:15 to 9:15 ante meridiem (a.m.) on September 1 (Saturday (Sat.)), 2018, a period may be a day (day) or a week (week), and traffic data in a time range that corresponds to the target time range and that is in an adjacent period may be determined as the time slice data.

For example, if a period (September 1, 2018) in which the target time range (8:15 to 9:15 a.m.) is located is a second period, August 30, 2018 may be regarded as the first period, and 8:15 to 9:15 a.m. on August 30, 2018 is a time range that corresponds to the target time range and that is in the first period, and a time range including this corresponding time range may be referred to as a specific time range. In the example in FIG. 5, the specific time range on August 30, 2018 is 6:30 to 9:30 a.m. Similarly, it may be further determined that 6:30 to 9:30 a.m. on August 30, 2018 is the specific time range. In this example, each specific time range may be referred to as *T_{d}.*

For another example, if a period (August 27, 2018 to September 2, 2018) in which the target time range (8:15 to 9:15 a.m.) is located is a second period, a period from August 20, 2018 to August 26, 2018 may be regarded as the first period, and 8:15 to 9:15 a.m. on August 25, 2018 (Saturday) is a time range that corresponds to the target time range and that is in the first period. A time range including this corresponding time range may be referred to as a specific time range. In the example in FIG. 5, a specific time range on August 20, 2018 to August 26, 2018 is 6:30 to 9:30 a.m. on August 25, 2018 (Saturday). Similarly, it may be further determined that 6:30 to 9:30 a.m. on August 11, 2018 (Saturday) is a specific time range. In this example, each specific time range may be referred to as *T_{w}.*

After the specific time range is determined, observation data in the specific time range is the time slice data.

Similarly, the time slice data may be further determined from traffic data in a historical time range by using a month (month) or a quarter (quarter) as a period.

In the example shown in FIG. 5, the time slice data further includes traffic data in a time range adjacent to the target time range, and the adjacent time range is, for example, 5:00 to 8:00 a.m. on September 1, 2018 and 8:00 to 11:00 post meridiem (p.m.) on August 30, 2018. In this example, each adjacent time range may be referred to as *Tᵣ.*

It should be noted that, the foregoing several examples about the time slice data may be used independently or in combination.

If traffic data in a historical time range is data obtained at an interval of 15 minutes, each time slice (*T_{d}, T_{w},* or *Tᵣ*) in FIG. 5 includes 12 pieces of data. Three pieces of the data in *T_{d},* three pieces of the data in *T_{w}*, and four pieces of the data in T, may be selected as the time slice data. In this case, there are totally 120 pieces of data (equivalent to data in eight hours) in the time slice data. Traffic data in 20 days includes about 1920 pieces of data in total. Compared with original data, performing prediction by using the time slice data can reduce the time required for prediction without affecting the prediction effect.

After the time feature data and the spatial feature data are obtained, the apparatus for performing the method 300 performs the following step.

S340: Obtain a predicted state of a target node in a target time range based on the spatial feature data and the time feature data, where the target node is any node in the plurality of nodes.

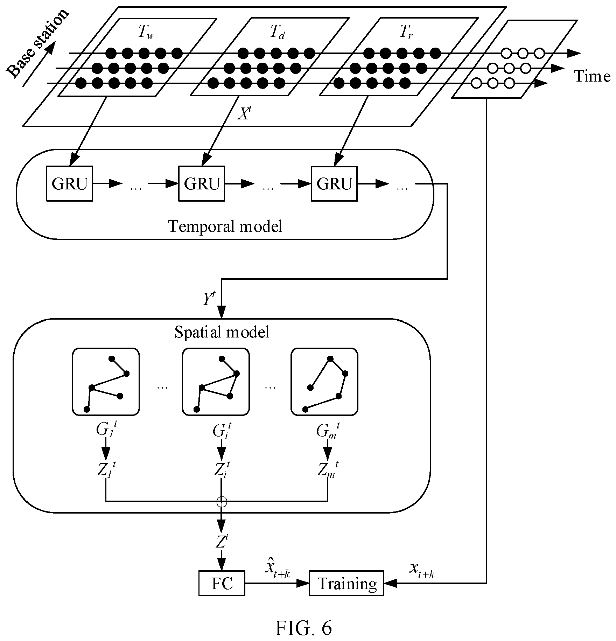

FIG. 6 shows a prediction method according to this application.

In FIG. 6, *X^{t}* denotes data obtained after time slicing processing is performed on base station observation data existing before a moment t. *X^{t}* is input into a temporal model (temporal model, and time feature data *Y^{t}* is output after processing by the temporal model. For example, the temporal model is a GRU.

Static graphs and dynamic graphs are input into a spatial model (spatial model), and spatial feature data is output after processing by the spatial model. For example, the spatial model is a GCN, and the time feature data includes ${Θ}_{∗ {G}_{i}^{t}} . {Θ}_{∗ {G}_{i}^{t}}$ denotes a result of a convolution operation performed on a graph ${G}_{i}^{t}$ by using a convolution kernel Θ of the GCN. ${G}_{i}^{t}$ is one of the dynamic graphs and the static graphs existing before the moment t.

Then, *Y^{t}* is input into the spatial model. Based on *Y^{t}* and ${Θ}_{∗ {G}_{i}^{t}}$, a result ${Z}_{i}^{t}$ combining a temporal feature and a spatial feature may be obtained, as shown in formula (5). ${Z}_{i}^{t} = ReLU \left({Θ}_{∗ {G}_{i}^{t}}\left({Y}^{t}\right)\right)$ (5)

*ReLU* denotes a rectified linear unit (rectified linear unit).

A final output result *Z^{t}* of the spatial model may be obtained by adding up a plurality of ${Z}_{i}^{t}$, as shown in formula (6). ${Z}^{t} = {\sum }_{i = 1}^{m} {Z}_{i}^{t}$ (6)

Then, *Z^{t}* may be processed by using a fully connected (fully connected, FC) layer to obtain *x̂ₜ₊ₖ*, as shown in formula (7). ${\hat{x}}_{t + k} = {Z}^{t} {W}_{f} + {b}_{f}$ (7)

*W_{f}* is a weight parameter of the FC layer, *b_{f}* is an offset parameter of the FC layer, and *x̂ₜ₊ₖ* denotes a predicted state of the target base station at a moment *t+k.*

It can be learned from the above that, in a process of node state prediction, a dynamic spatial feature obtained from observation data is used in addition to a time feature and a static spatial feature that are obtained from the observation data. This increases accuracy of node state prediction in a network with a dynamic topological relationship.

In a training process, co-training may be performed on the temporal model, the spatial model, and the FC layer by minimizing a loss function. An optional loss function is shown in formula (8). $L \left({\hat{x}}_{t + k}, {x}_{t + k}\right) = {\sum }_{t ∈ {T}_{train}} \frac{1}{N} {\sum }_{i = 1}^{N} \left({\left({\hat{x}}_{t + k}\left(i\right)-{x}_{t + k}\left(i\right)\right)}^{2}+α\frac{1}{N}\left|{\hat{x}}_{t + k}\left(i\right)-{x}_{t + k}\left(i\right)\right|\right)$ (8)

*L*(*x̂_{t+k,}xₜ₊ₖ*) is the loss function, *xₜ₊ₖ* is a true state of the target base station at the moment *t+k,* (*x̂ₜ₊ₖ*(*i*) - *xₜ₊ₖ*(*i*))² is a mean square error (mean square error, MSE), |*x̂ₜ₊ₖ*(*i*) *- xₜ₊ₖ*(*i*)| is a mean absolute error (mean absolute error, MAE), *α* is used to balance weights of the MSE and the MAE, and N denotes a quantity of nodes.

The following compares the prediction effect of the method 300 with prediction effects of other methods to describe beneficial effects of this application.

The methods participating in the comparison include historical average (historical average, HA), Prophet (Prophet), Spatio-Temporal Graph Convolutional Network (spatio-temporal graph convolutional network, STGCN), Attention Spatio -Temporal Graph Convolutional Network (attention spatio-temporal graph convolutional network, ASTGCN) and Diffusion Convolutional Recurrent Neural Network (diffusion convolutional recurrent neural network, DCRNN), and evaluation indicators are a root mean square error (root mean square error, RMSE) and an MAE. Smaller values of the RMSE and the MAE indicate a better predictive capability of a method. Comparison results are shown in Table 1.

**Table 1**

| | 15 minutes | | 30 minutes | | 45 minutes | | 1 hour | |
|---|---|---|---|---|---|---|---|---|
| | RMSE | MAE | RMSE | MAE | RMSE | MAE | RMSE | MAE |
| HA | 108.9 | 44.2 | 108.9 | 44.2 | 108.9 | 44.2 | 108.9 | 44.2 |
| Prophet | 70.3 | 42.3 | 72.2 | 43.0 | 73.8 | 43.7 | 75.2 | 44.2 |
| STGCN | 52.7±1.0 | 24.7±0.2 | 66.8±1.6 | 30.8±0.4 | 75.3±2.0 | 34.7±0.6 | 82.4±2.5 | 37.9±0.8 |
| ASTGCN | 72.4±2.7 | 28.5±1.2 | 74.5±2.7 | 29.9±1.2 | 78.1±2.6 | 32.6±1.2 | 82.1±2.7 | 35.2±1.3 |
| DCRNN | 52.6±0.3 | 24.4±0.1 | 64.1±0.7 | 29.8±0.2 | 71.8±1.0 | 33.4±0.3 | 78.5±1.2 | 36.5±0.5 |
| Method 300 | 45.6±0.6 | 21.4±0.2 | 51.9±0.8 | 24.9±0.3 | 56.4±1.3 | 27.3±0.4 | 62.3±1.8 | 30.6±0.5 |

The STGCN, ASTGCN, DCRNN, and method 300 are deep learning-based methods. Some differences exist in a result of each operation. Table 1 shows results of 10 predictions separately performed by these methods, and also shows mean values and variances. It can be learned from Table 1 that, the method 300 achieves an optimal prediction effect among the several methods.

The foregoing describes in detail an example of a method for predicting a node state according to this application. It can be understood that, to implement the foregoing functions, a corresponding apparatus includes a corresponding hardware structure and/or software module for executing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, functional unit division of the apparatus may be performed based on the foregoing method examples. For example, functions may be divided into functional units, or two or more functions may be integrated into one unit. The integrated unit may be implemented in a form of hardware, or may be implemented in a form of a software functional unit. It should be noted that, unit division in this application is an example, and is merely logical function division. During actual implementation, another division manner may be used.

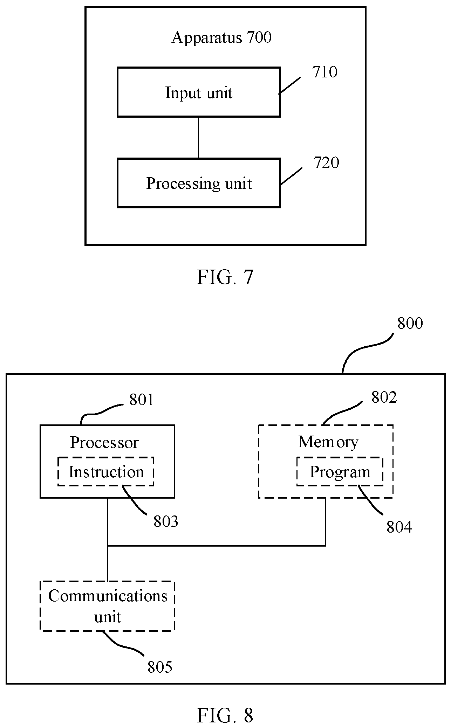

FIG. 7 is a schematic structural diagram of an apparatus for predicting a node state according to this application. An apparatus 700 includes an input unit 710 and a processing unit 720.

The processing unit 720 is configured to obtain static graphs and dynamic graphs of a plurality of nodes in a target network, where the static graphs and the dynamic graphs are all topology views; generate spatial feature data of the plurality of nodes based on the static graphs and the dynamic graphs; obtain time feature data of the plurality of nodes; and obtain a predicted state of a target node in a target time range based on the spatial feature data and the time feature data, where the target node is any node in the plurality of nodes.

The input unit 710 is configured to obtain observation data of the plurality of nodes in a first historical time range, where the first historical time range is a time range before the target time range; and the processing unit 720 is specifically configured to slice the observation data in a time dimension to obtain time slice data, where a data amount of the time slice data is less than a data amount of the observation data; and obtain the time feature data based on the time slice data.

Optionally, the time slice data includes: observation data in a time range that is in the first historical time range and that is adjacent to the target time range.

Optionally, the time slice data includes: observation data in a specific time range in the first historical time range, where the specific time range is located in a first period, the target time range is located in a second period, and the specific time range includes a time range that corresponds to the target time range and that is in the first period.

Optionally, the input unit 710 is configured to obtain observation data of the plurality of nodes in a second historical time range, where the second historical time range is a time range before the target time range; and the processing unit 720 is specifically configured to construct the static graphs and the dynamic graphs based on the observation data.

Optionally, the observation data includes at least one of the following data: meteorological data, network topology data, traffic data, voice data, signaling data, POI data, major-event data, and holiday data.

Optionally, the processing unit 720 is further configured to obtain a true state of the target node in the target time range; and train a temporal model and a spatial model based on the true state and the predicted state, where the temporal model is used to output the time feature data based on input observation data, and the spatial model is used to output the spatial feature data based on the static graphs and the dynamic graphs that are input.

Optionally, the static graphs belong to first-type topology views, the dynamic graphs belong to second-type topology views, and a topological relationship change rate of the first-type topology views is less than a topological relationship change rate of the second-type topology views.

Optionally, the target network is a communications network, the static graphs are topology views representing a traffic-based topological relationship of the plurality of nodes, and the dynamic graphs are topology views representing a physical-line-based topological relationship of the plurality of nodes.

For a specific manner in which the apparatus 700 performs the method for predicting a node state and a beneficial effect incurred, refer to related descriptions in the method embodiments.

FIG. 8 is a schematic structural diagram of a device for predicting a node state according to this application. A dashed line in FIG. 8 indicates that a unit or the module is optional. A device 800 may be configured to implement the method described in the foregoing method embodiments. The device 800 may be a terminal device, a server, or a chip.

The device 800 includes one or more processors 801. The one or more processors 801 can support the device 800 in implementing the method in the method embodiments. The processor 801 may be a general-purpose processor or a dedicated processor. For example, the processor 801 may be a central processing unit (central processing unit, CPU). The CPU may be configured to control the device 800, execute a software program, and process data of the software program. The device 800 may further include a communications unit 805, configured to implement input (receiving) and/or output (sending) of signals (such as observation data and prediction results).

For example, the device 800 may be a chip, and the communications unit 805 may be an input circuit and/or an output circuit of the chip, or the communications unit 805 may be a communications interface of the chip. The chip may be used as a component of a terminal device, a network device, or another electronic device.

For another example, the device 800 may be a terminal device or a server, and the communications unit 805 may be a transceiver of the terminal device or the server, or the communications unit 805 may be a transceiver circuit of the terminal device or the server.

The device 800 may include one or more memories 802, which store a program 804. The program 804 may be run by the processor 801 to generate an instruction 803, so that the processor 801 performs the method described in the foregoing method embodiments based on the instruction 803. Optionally, the memory 802 may further store data (for example, observation data). Optionally, the processor 801 may further read the data stored in the memory 802, where the data may be stored at a storage address the same as that of the program 804, or the data may be stored at a storage address different from that of the program 804.

The processor 801 and the memory 802 may be separately disposed, or may be integrated together, for example, integrated on a system on chip (system on chip, SOC) of a terminal device.

For a specific manner in which the processor 801 executes the method embodiments, refer to related descriptions in the method embodiments.

It should be understood that the steps in the foregoing method embodiments may be completed by using a logic circuit in a form of hardware or an instruction in a form of software in the processor 801. The processor 801 may be a CPU, a digital signal processor (digital signal processor, DSP), an application specific integrated circuit (application specific integrated circuit, ASIC), a field programmable gate array (field programmable gate array, FPGA), or another programmable logic device, for example, discrete gates, transistor logic, or discrete hardware components.

This application further provides a computer program product. When the computer program product is executed by the processor 801, the method according to any method embodiment of this application is implemented.

The computer program product may be stored in the memory 802, for example, may be the program 804. After processing processes such as preprocessing, compilation, assembly, and linking, the program 804 is finally converted into an executable target file that can be executed by the processor 801.

This application further provides a computer readable storage medium, which stores a computer program. When the computer program is executed by a computer, the method according to any method embodiment of this application is implemented. The computer program may be a high-level language program or an executable target program.

For example, the computer readable storage medium is the memory 802. The memory 802 may be a volatile memory or a non-volatile memory, or the memory 802 may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It may be clearly understood by a person skilled in the art that, for ease and brevity of description, for a specific working process and a generated technical effect of the foregoing apparatus and device, refer to a corresponding process and technical effect in the foregoing method embodiments, and details are not described herein again.

In the several embodiments provided in this application, the disclosed system, apparatus and method may be implemented in other manners. For example, some features of the method embodiments described above may be ignored or not performed. The described apparatus embodiments are merely examples. The unit division is merely logical function division and may be other division in actual implementation. A plurality of units or components may be combined or integrated into another system. In addition, coupling between the units or coupling between the components may be direct coupling or indirect coupling, and the coupling may include an electrical connection, a mechanical connection, or another form of connection.

Sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In addition, the term "and/or" in this specification describes only an association relationship for associated objects and represents that three relationships may exist. For example, A and/or B may represent the following three cases: Only A exists, both A and B exist, and only B exists. In addition, the character "/" in this specification generally indicates an "or" relationship between the associated objects.

In summary, what is described above is merely example embodiments of the technical solutions of this application, but is not intended to limit the protection scope of this application.

## Claims

1. A method for predicting a node state, comprising:
obtaining (S310) static graphs and dynamic graphs of a plurality of nodes in a target network, wherein the static graphs and the dynamic graphs are all topology views;
generating (S320) spatial feature data of the plurality of nodes based on the static graphs and the dynamic graphs using a spatial model;
obtaining (S330) time feature data of the plurality of nodes using a temporal model, wherein the obtaining (S330) time feature data of the plurality of nodes comprises: obtaining observation data of the plurality of nodes in a first historical time range, wherein the first historical time range is a time range before a
target time range; slicing the observation data in a time dimension to obtain time slice data, wherein a data amount of the time slice data is less than a data amount of the observation data; and obtaining the time feature data based on the time slice data; and
obtaining (S340) a predicted state of a target node in the target time range based on the spatial feature data and the time feature data, wherein the target node is any node in the plurality of nodes,
wherein the method further comprises:
obtaining a true state of the target node in the target time range; and
training the temporal model and the spatial model based on the true state and the predicted state, wherein the temporal model is used to output the time feature data based on the observation data, and the spatial model is used to output the spatial feature data based on the static graphs and the dynamic graphs that are input.

2. The method according to claim 1, wherein the time slice data comprises:
observation data in a time range that is in the first historical time range and that is adjacent to the target time range.

3. The method according to claim 1 or 2, wherein the time slice data comprises:
observation data in a specific time range in the first historical time range, wherein the specific time range is located in a first period, the target time range is located in a second period, and the specific time range comprises a time range that corresponds to the target time range and that is in the first period.

4. The method according to any one of claims 1 to 3, wherein the obtaining (S310) static graphs and dynamic graphs of a plurality of nodes comprises:
obtaining observation data of the plurality of nodes in a second historical time range, wherein the second historical time range is a time range before the target time range; and
constructing the static graphs and the dynamic graphs based on the observation data.

5. The method according to claim 4, wherein the observation data comprises at least one of the following data:
meteorological data, network topology data, traffic data, voice data, signaling data, point of interest POI data, major-event data, or holiday data.

6. The method according to any one of claims 1 to 5, wherein the target network is a communications network, the static graphs are topology views representing a traffic-based topological relationship of the plurality of nodes, and the dynamic graphs are topology views representing a physical-line-based topological relationship of the plurality of nodes.

7. An apparatus (700) for predicting a node state, comprising a processing unit (720) configured to:
obtain static graphs and dynamic graphs of a plurality of nodes in a target network, wherein the static graphs and the dynamic graphs are all topology views;
generate spatial feature data of the plurality of nodes based on the static graphs and the dynamic graphs using a spatial model;
obtain time feature data of the plurality of nodes using a temporal model;
obtain a predicted state of a target node in a target time range based on the spatial feature data and the time feature data, wherein the target node is any node in the plurality of nodes;
obtain a true state of the target node in the target time range; and
train the temporal model and the spatial model based on the true state and the predicted state, wherein the temporal model is used to output the time feature data based on input observation data, and the spatial model is used to output the spatial feature data based on the static graphs and the dynamic graphs that are input,
wherein the apparatus (700) further comprises an input unit (710), wherein
the input unit (710) is configured to obtain observation data of the plurality of nodes in a first historical time range, wherein the first historical time range is a time range before the target time range;
the processing unit (720) is specifically configured to slice the observation data in a time dimension to obtain time slice data, wherein a data amount of the time slice data is less than a data amount of the observation data; and obtain the time feature data based on the time slice data.

8. The apparatus (700) according to claim 7, wherein the apparatus (700) further comprises an input unit (710), wherein
the input unit (710) is configured to obtain observation data of the plurality of nodes in a second historical time range, wherein the second historical time range is a time range before the target time range; and
the processing unit (720) is specifically configured to construct the static graphs and the dynamic graphs based on the observation data.

9. A computer readable storage medium, wherein the computer readable storage medium stores a computer program, and when the computer program is executed by a processor, the processor is enabled to perform the method according to any one of claims 1 to 6.

## Patentansprüche

1. Verfahren zum Vorhersagen eines Knotenstatus, umfassend:
Erlangen (S310) statischer Graphen und dynamischer Graphen einer Vielzahl von Knoten in einem Zielnetz, wobei die statischen Graphen und die dynamischen Graphen alle Topologieansichten sind;
Erzeugen (S320) räumlicher Merkmalsdaten der Vielzahl von Knoten basierend auf den statischen Graphen und den dynamischen Graphen unter Verwendung eines räumlichen Modells;
Erlangen (S330) von Zeitmerkmalsdaten der Vielzahl von Knoten unter Verwendung eines zeitlichen Modells, wobei das Erlangen (S330) von Zeitmerkmalsdaten der Vielzahl von Knoten Folgendes umfasst: Erlangen von Beobachtungsdaten der Vielzahl von Knoten in einem ersten historischen Zeitbereich, wobei der erste historische Zeitbereich ein Zeitbereich vor einem Zielzeitbereich ist; In-Scheiben-Aufteilen der Beobachtungsdaten in einer Zeitdimension, um Zeitscheibendaten zu erlangen, wobei eine Datenmenge der Zeitscheibendaten kleiner als eine Datenmenge der Beobachtungsdaten ist; und Erlangen der Zeitmerkmalsdaten basierend auf den Zeitscheibendaten; und
Erlangen (S340) eines vorhergesagten Status eines Zielknotens in dem Zielzeitbereich basierend auf den räumlichen Merkmalsdaten und den Zeitmerkmalsdaten, wobei der Zielknoten ein beliebiger Knoten in der Vielzahl von Knoten ist,
wobei das Verfahren ferner Folgendes umfasst:
Erlangen eines tatsächlichen Status des Zielknotens in dem Zielzeitbereich; und
Trainieren des zeitlichen Modells und des räumlichen Modells basierend auf dem tatsächlichen Status und dem vorhergesagten Status, wobei das zeitliche Modell dazu verwendet wird, die Zeitmerkmalsdaten basierend auf den Beobachtungsdaten auszugeben, und das räumliche Modell dazu verwendet wird, die räumlichen Merkmalsdaten basierend auf den statischen Graphen und den dynamischen Graphen auszugeben, die eingegeben werden.

2. Verfahren nach Anspruch 1, wobei die Zeitscheibendaten Folgendes umfassen:
Beobachtungsdaten in einem Zeitbereich, der sich in dem ersten historischen Zeitbereich befindet und der zu dem Zielzeitbereich benachbart ist.

3. Verfahren nach Anspruch 1 oder 2, wobei die Zeitscheibendaten Folgendes umfassen:
Beobachtungsdaten in einem spezifischen Zeitbereich innerhalb des ersten historischen Zeitbereichs, wobei sich der spezifische Zeitbereich in einer ersten Periode befindet, sich der Zielzeitbereich in einer zweiten Periode befindet und der spezifische Zeitbereich einen Zeitbereich umfasst, der dem Zielzeitbereich entspricht und der sich in der ersten Periode befindet.

4. Verfahren nach einem der Ansprüche 1 bis 3, wobei das Erlangen (S310) statischer Graphen und dynamischer Graphen einer Vielzahl von Knoten Folgendes umfasst:
Erlangen von Beobachtungsdaten der Vielzahl von Knoten in einem zweiten historischen Zeitbereich, wobei der zweite historische Zeitbereich ein Zeitbereich vor dem Zielzeitbereich ist; und
Konstruieren der statischen Graphen und der dynamischen Graphen basierend auf den Beobachtungsdaten.

5. Verfahren nach Anspruch 4, wobei die Beobachtungsdaten mindestens eines der folgenden Daten umfassen:
meteorologischer Daten, Netztopologiedaten, Verkehrsdaten, Sprachdaten, Signalisierungsdaten, Punkt-von-Interesse-Daten, POI-Daten, Großereignisdaten oder Feiertagsdaten.

6. Verfahren nach einem der Ansprüche 1 bis 5, wobei das Zielnetz ein Kommunikationsnetz ist, die statischen Graphen Topologieansichten sind, die eine verkehrsbasierte topologische Beziehung der Vielzahl von Knoten darstellen, und die dynamischen Graphen Topologieansichten sind, die eine auf physikalischen Linien basierende topologische Beziehung der Vielzahl von Knoten darstellen.

7. Vorrichtung (700) zum Vorhersagen eines Knotenstatus, umfassend eine Verarbeitungseinheit (720), die zu Folgendem konfiguriert ist:
Erlangen statischer Graphen und dynamischer Graphen einer Vielzahl von Knoten in einem Zielnetz, wobei die statischen Graphen und die dynamischen Graphen alle Topologieansichten sind;
Erzeugen räumlicher Merkmalsdaten der Vielzahl von Knoten basierend auf den statischen Graphen und den dynamischen Graphen unter Verwendung eines räumlichen Modells;
Erlangen von Zeitmerkmalsdaten der Vielzahl von Knoten unter Verwendung eines zeitlichen Modells;
Erlangen eines vorhergesagten Status eines Zielknotens in einem Zielzeitbereich basierend auf den räumlichen Merkmalsdaten und den Zeitmerkmalsdaten, wobei der Zielknoten ein beliebiger Knoten in der Vielzahl von Knoten ist;
Erlangen eines tatsächlichen Status des Zielknotens in dem Zielzeitbereich; und
Trainieren des zeitlichen Modells und des räumlichen Modells basierend auf dem tatsächlichen Status und dem vorhergesagten Status, wobei das zeitliche Modell dazu verwendet wird, die Zeitmerkmalsdaten basierend auf eingegebenen Beobachtungsdaten auszugeben, und das räumliche Modell dazu verwendet wird, die räumlichen Merkmalsdaten basierend auf den statischen Graphen und den dynamischen Graphen auszugeben, die eingegeben werden, wobei die Vorrichtung (700) ferner eine Eingabeeinheit (710) umfasst, wobei
die Eingabeeinheit (710) dazu konfiguriert ist, Beobachtungsdaten der Vielzahl von Knoten in einem ersten historischen Zeitbereich zu erlangen, wobei der erste historische Zeitbereich ein Zeitbereich vor dem Zielzeitbereich ist;
die Verarbeitungseinheit (720) spezifisch dazu konfiguriert ist, die Beobachtungsdaten in einer Zeitdimension in Scheiben aufzuteilen, um Zeitscheibendaten zu erlangen, wobei eine Datenmenge der Zeitscheibendaten kleiner als eine Datenmenge der Beobachtungsdaten ist; und die Zeitmerkmalsdaten basierend auf den Zeitscheibendaten zu erlangen.

8. Vorrichtung (700) nach Anspruch 7, wobei die Vorrichtung (700) ferner eine Eingabeeinheit (710) umfasst, wobei
die Eingabeeinheit (710) dazu konfiguriert ist, Beobachtungsdaten der Vielzahl von Knoten in einem zweiten historischen Zeitbereich zu erlangen, wobei der zweite historische Zeitbereich ein Zeitbereich vor dem Zielzeitbereich ist; und
die Verarbeitungseinheit (720) spezifisch dazu konfiguriert ist, die statischen Graphen und die dynamischen Graphen basierend auf den Beobachtungsdaten zu konstruieren.

9. Computerlesbares Speichermedium, wobei das computerlesbare Speichermedium ein Computerprogramm speichert und, wenn das Computerprogramm durch einen Prozessor ausgeführt wird, es dem Prozessor ermöglicht wird, das Verfahren nach einem der Ansprüche 1 bis 6 durchzuführen.

## Revendications

1. Procédé de prédiction d'un état de nœud, comprenant :
l'obtention (S310) de graphes statiques et de graphes dynamiques d'une pluralité de nœuds dans un réseau cible, dans lequel les graphes statiques et les graphes dynamiques sont tous des vues de topologie ;
la génération (S320) de données de caractéristiques spatiales de la pluralité de nœuds sur la base des graphes statiques et des graphes dynamiques à l'aide d'un modèle spatial ;
l'obtention (S330) de données de caractéristiques temporelles de la pluralité de nœuds à l'aide d'un modèle temporel, dans lequel l'obtention (S330) de données de caractéristiques temporelles de la pluralité de nœuds comprend : l'obtention de données d'observation de la pluralité de nœuds dans une première plage temporelle historique, dans lequel la première plage temporelle historique est une plage temporelle antérieure à une plage temporelle cible ; le découpage des données d'observation dans une dimension temporelle afin d'obtenir des données de tranches temporelles, dans lequel une quantité de données des données de la tranche temporelle est inférieure à la quantité de données des données d'observation ; et l'obtention des données de caractéristiques temporelles sur la base des données de tranches temporelles ; et
l'obtention (S340) d'un état prédit d'un nœud cible dans la plage temporelle cible sur la base des données de caractéristiques spatiales et des données de caractéristiques temporelles, dans lequel le nœud cible est n'importe quel nœud parmi la pluralité de nœuds,
dans lequel le procédé comprend en outre :
l'obtention d'un état réel du nœud cible dans la plage temporelle cible ; et
l'entraînement du modèle temporel et du modèle spatial sur la base de l'état réel et de l'état prédit, dans lequel le modèle temporel est utilisé pour émettre les données de caractéristiques temporelles sur la base des données d'observation, et le modèle spatial est utilisé pour émettre les données de caractéristiques spatiales sur la base des graphes statiques et des graphes dynamiques qui sont entrés.

2. Procédé selon la revendication 1, dans lequel les données de tranche temporelle comprennent :
des données d'observation dans une plage temporelle qui se situe dans la première plage temporelle historique et qui est adjacente à la plage temporelle cible.

3. Procédé selon la revendication 1 ou 2, dans lequel les données de tranche temporelle comprennent :
des données d'observation dans une plage temporelle spécifique dans la première plage temporelle historique, dans lequel la plage temporelle spécifique se situe dans une première période, la plage temporelle cible se situe dans une seconde période, et la plage temporelle spécifique comprend une plage temporelle qui correspond à la plage temporelle cible et qui se trouve dans la première période.

4. Procédé selon l'une quelconque des revendications 1 à 3, dans lequel l'obtention des graphes statiques (S310) et des graphes dynamiques d'une pluralité de nœuds comprend :
l'obtention de données d'observation de la pluralité de nœuds dans une seconde plage temporelle historique, dans lequel la seconde plage temporelle historique est une plage temporelle antérieure à la plage temporelle cible ; et
la construction des graphes statiques et des graphes dynamiques à partir des données d'observation.

5. Procédé selon la revendication 4, dans lequel les données d'observation comprennent au moins l'une des données suivantes :
des données météorologiques, des données de topologie de réseau, des données de trafic, des données vocales, des données de signalisation, des données de points d'intérêt (POI), des données sur les événements majeurs ou des données sur les jours fériés.

6. Procédé selon l'une quelconque des revendications 1 à 5, dans lequel le réseau cible est un réseau de communication, les graphes statiques sont des vues topologiques représentant une relation topologique basée sur le trafic de la pluralité de nœuds, et les graphes dynamiques sont des vues topologiques représentant une relation topologique basée sur les lignes physiques de la pluralité de nœuds.

7. Appareil (700) de prédiction d'un état de nœud, comprenant une unité de traitement (720) configurée pour :
obtenir des graphes statiques et des graphes dynamiques d'une pluralité de nœuds dans un réseau cible, dans lequel les graphes statiques et les graphes dynamiques sont tous des vues de topologie ;
générer des données de caractéristiques spatiales de la pluralité de nœuds sur la base des graphes statiques et des graphes dynamiques à l'aide d'un modèle spatial ;
obtenir des données de caractéristiques temporelles sur la pluralité des nœuds à l'aide d'un modèle temporel ;
obtenir un état prédit d'un nœud cible dans une plage temporelle cible sur la base des données de caractéristiques spatiales et des données de caractéristiques temporelles, dans lequel le nœud cible est n'importe quel nœud parmi la pluralité de nœuds ;
obtenir un état réel du nœud cible dans la plage temporelle cible ; et
entraîner le modèle temporel et le modèle spatial sur la base de l'état réel et de l'état prédit, dans lequel le modèle temporel est utilisé pour produire les données de caractéristiques temporelles sur la base des données d'observation, et le modèle spatial est utilisé pour produire les données de caractéristiques spatiales sur la base des graphes statiques et des graphes dynamiques qui sont entrés,
dans lequel l'appareil (700) comprend en outre une unité d'entrée (710), dans lequel
l'unité d'entrée (710) est configurée pour obtenir des données d'observation de la pluralité de nœuds dans une première plage temporelle historique, dans lequel la première plage temporelle historique est une plage temporelle antérieure à la plage temporelle cible ;
l'unité de traitement (720) est spécifiquement configurée pour découper les données d'observation dans une dimension temporelle afin d'obtenir des données de tranche temporelle, dans lequel une quantité de données des données de la tranche temporelle est inférieure à une quantité de données des données d'observation ;
et obtenir les données de caractéristiques temporelles sur la base des données de tranche temporelle.

8. Appareil (700) selon la revendication 7, dans lequel l'appareil (700) comprend en outre une unité d'entrée (710), dans lequel
l'unité d'entrée (710) est configurée pour obtenir des données d'observation de la pluralité de nœuds dans une seconde plage temporelle historique, dans lequel la seconde plage temporelle historique est une plage temporelle antérieure à la plage temporelle cible ; et
l'unité de traitement (720) est spécifiquement configurée pour construire les graphes statiques et les graphes dynamiques sur la base des données d'observation.

9. Support de stockage lisible par ordinateur, dans lequel le support de stockage lisible par ordinateur stocke un programme informatique, et lorsque le programme informatique est exécuté par un processeur, le processeur est activé pour réaliser le procédé selon l'une quelconque des revendications 1 à 6.
